# EUROPEAN PATENT SPECIFICATION

(11) **EP 2 286 338 B1**
(45) Date of publication and mention of the grant of the patent: **30.01.2019**
(21) Application number: 09757362.0
(22) Date of filing: 24.04.2009
(51) Int. Cl.: G06F 11/36

(54) **METHOD SYSTEM AND COMPUTER PROGRAM FOR IDENTIFYING SOFTWARE PROBLEMS**
VERFAHREN, SYSTEM UND COMPUTERPROGRAMM ZUR IDENTIFIKATION VON SOFTWARE-PROBLEMEN
PROCÉDÉ, SYSTÈME ET PROGRAMME D'ORDINATEUR POUR IDENTIFIER DES PROBLÈMES LOGICIELS

(30) Priority: 05.06.2008 EP 08157626
(43) Date of publication of application: 23.02.2011
(73) Proprietor: International Business Machines Corporation, Armonk, NY 10504 (US)
(72) Inventor: SIMEONI, Maurizio, I-00144 Roma (RM) (IT)
(74) Representative: Lück, Stephan
(86) International application number: PCT/EP2009/054928
(87) International publication number: WO 2009/146979

(56) References cited:
- WO-A-98/38575
- WO-A-03/027850
- WO-A1-00/54156
- US-A1- 2004 168 107
- US-B1- 6 996 516

## Description

### Technical Field

The present invention relates to a method, system and computer program for identifying a software problem.

### Background

To detect and resolve a software problem, it is typically necessary to identify and isolate the software components involved in the scenario wherein the software problem has occurred. For simplicity, these scenarios will be known henceforth as *"usage scenarios".* More particularly, the process of troubleshooting the software problem requires the collection and analysis of the runtime dependencies and configurations of the identified software components. However, this process can be extremely costly and time-consuming (e.g. often taking several days and requiring the involvement of a customer-support facility).

The IBM Tivoli Application Dependency Discovery Manager(TADDM) is a software tool which provides a mechanism for discovering and analysing the runtime dependencies and configurations of multi-tiered software applications. In particular, the TADDM provides snapshots of the current infrastructure of a software application in the form of read-only views of the entire topology of the application. The TADDM further comprises an analytic reporting tool which enables comparisons to be made between different snapshots of the software application under study. However, the TADDM does not allow the isolation of software components involved in a particular usage scenario of a software application. Similarly, the TADDM is not automatically executed and does not allow a scenario to be compared against a snapshot taken in a reference environment.
The international patent application WO 03/027850 A to BOSCH GMBH Robert; Wolf Hans-Joerg and Zuzawka Thomas published on April 3, 2003 discloses a method to test a software application on a system by running a test on two systems and comparing the results. The test consists in providing input variables to a running software application and collecting the inputs. The two systems are linked and the execution of the test on the two systems on which is running the software application are performed simultaneously. There is a need to provide a way to test a software application on two independent systems and to perform the test on the reference system and on the system on study at different time.

### Summary of the invention

According to the invention there is provided a method of identifying problems in a software application in a computer system, the method comprising the steps of: allowing a user to define a one or more usage scenarios of the software application; executing, in a reference computer system, the software application with one or more of the usage scenarios; acquiring data concerning a status of a one or more of the reference computer system and the software application therein, during the execution of the software application with the one or more of the usage scenarios; executing, in the computer system under study, the software application with the same one or more usage scenarios executed in the reference computer system; acquiring data concerning a status of a one or more of the computer systems under study and the software application therein, during the execution of the software application with the one or more of the usage scenarios; comparing the data from the reference computer system and the computer system under study, to identify the one or more differences therebetween.

The preferred embodiment provides a system and method for discovering and analysing the runtime dependency configurations on multi-tiered applications. In particular, the method and system of the preferred embodiment enables snapshots of the current infrastructure of a software system to be taken and compared against snapshots of a reference software system, to enable the specific software components involved in a problem fault in the current infrastructure, to be identified and detected.

The method of the preferred embodiment may be used at the end of an installation process to check if the product or patch has been successfully installed by defining a usage scenario descriptor for the installation process. The method of the preferred embodiment may also be used for usage scenario test progression. In particular, the method of the preferred embodiment can allow a user to prepare a usage scenario descriptor for each regression scenario before applying a patch in a production environment. Furthermore, the method of the preferred embodiment can automatically run the usage scenario discovery process in the test environment and cause the comparator to verify the result therefrom.

### Brief description of the drawings

An embodiment of the invention is herein described by way of example only, with reference to the accompanying drawings in which:
Figure 1 is a block diagram of the architecture of the system of the preferred embodiment;
Figure 2 comprises an XML file representing a usage scenario descriptor;
Figure 3 is a flowchart of the method of the preferred embodiment; and
Figure 4 is a block diagram of a computer system adapted to perform the method of the preferred embodiment.

### Detailed description of the invention

### 1. Overview

The preferred embodiment provides a mechanism for accelerating the processes of:
- isolating a software problem;
- detecting the nature of the problem; and
- resolving it.
The preferred embodiment achieves this, by isolating the software components involved in the software system in which the problem occurred. To this end, the preferred embodiment:-
- automatically executes a predefined usage scenario within the infrastructure of the faulty software application; and
- compares the results of this process, with the results of executing the predefined usage scenario in a reference software system.

The predefined usage scenario can be a "reference usage scenario" or "real-world usage scenario". A reference usage scenario is a typical usage scenario of the product and is provided by the software manufacturer. A real-world usage scenario is a specific usage scenario implemented by a user for specific purpose. The choice of which usage scenario the user employs, is largely dependent on how the user uses the software system under study.

### 2. Detailed Description

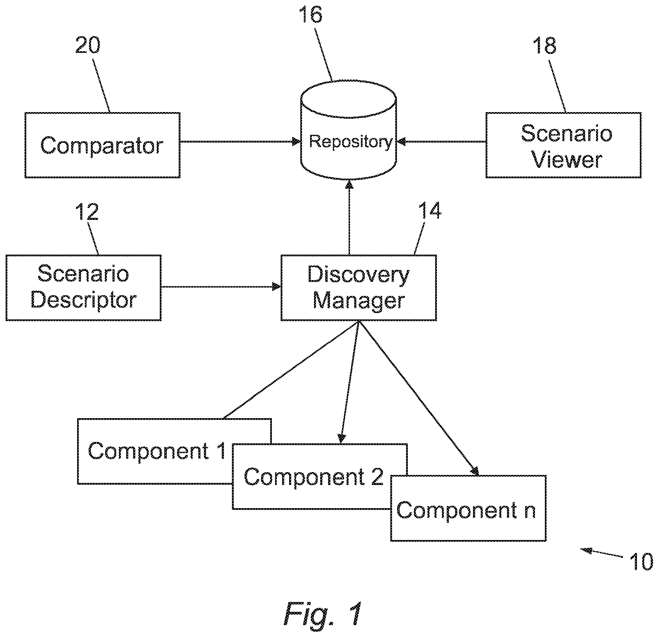

Referring to Figure 1, the system 10 of the preferred embodiment comprises a usage scenario descriptor 12 and a usage scenario snapshot (not shown) being transmitted between a discovery engine manager 14 and a primary repository 16. The primary repository 16 is further accessed by a usage scenario viewer 18 and a usage scenario comparator 20.

In the present example, the usage scenario descriptor 12 is a file which describes a potential usage scenario and the software components involved in that usage scenario. The usage scenario can be a "reference usage scenario" or "real-world usage scenario". A reference usage scenario is a typical usage scenario of the product and is provided by the software manufacturer. A real-world usage scenario is a specific usage scenario implemented by a user for specific purpose. In the present example, the usage scenario descriptor 12 is provided in XML. However, the skilled person will understand that the usage scenario descriptor 12 could also be written in any other suitable language.

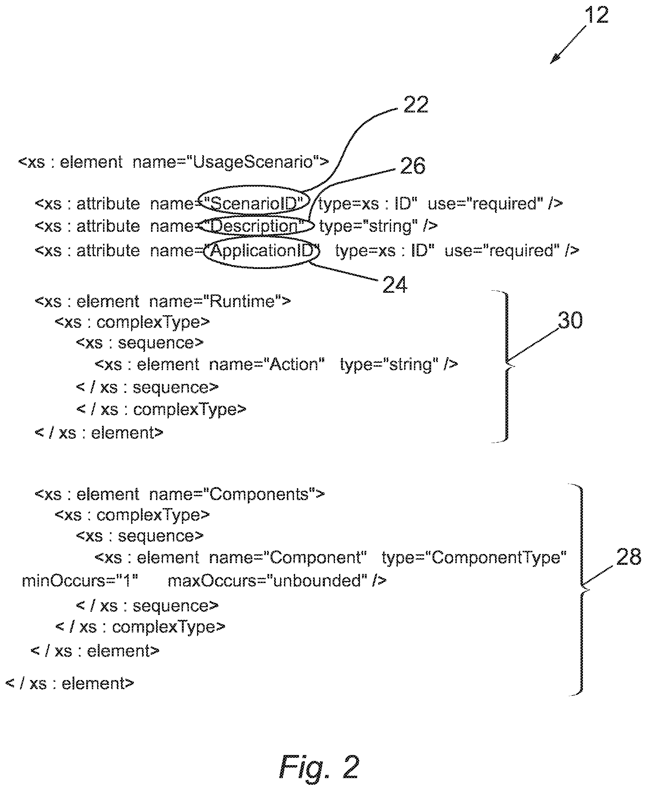

Referring to Figure 2, the usage scenario descriptor 12 identifies a particular usage scenario by a scenario ID 22. The usage scenario descriptor 12 also identifies a software application, by an application ID 24. The software application and application components therein, are further detailed by a description tag 26 and a sequence of component elements 28. The sequence of components elements 28 contain the name of the component, details of the computer where it is installed (e.g. hostname, protocol (e.g. ssh) and password needed to remotely execute the component).

The usage scenario descriptor 12 further comprises a runtime section 30 which describes a set of actions to be performed on the components of the application under study. The actions include, for example, sending requests to components, receiving responses therefrom, collating the responses to form a snapshot (e.g. logs, application status, system information, registry information etc.) of the application under study. In the present example, the runtime section 30 is expressed in a script-like language. However, it will be appreciated that the runtime section could also be expressed in other languages. It will be appreciated that the above-mentioned formulation of the usage scenario descriptor 12 is provided for example purposes only, and should not be construed as meaning that the usage scenario descriptor 12 is limited in any way to this particular formulation. In particular, the usage scenario descriptor 12 may use other tagging and descriptor mechanisms to identify and refer to the usage scenario in question and the components of the software application in which the problem occurred.

The discovery engine manager 14 performs usage scenario discovery, namely, executing the scenario described in the runtime section 30 of the usage scenario descriptor 12, using the components listed in the components elements 28 section of the usage scenario descriptor 12. During this process, a usage scenario snapshot is taken of the computer system under study. For simplicity, the term "snapshot" will be understood to mean data pertaining to the status of a computer system. The discovery engine manager 14 stores both the usage scenario descriptors 12 and the usage scenario snapshots in the primary repository 16.

The preferred embodiment also executes the same usage scenario on a reference computer system. The reference computer system is a computer system where the product is installed and where it is working as designed. It can be a test computer system, (i.e. a computer system used by the customer to verify a product before installing it in a production computer), or the manufacturer's computer wherein the product is tested and used for creating snapshots of 'reference usage scenarios'. It will also be understood that the term computer system, as used in the present embodiment, embraces a distributed computer system, since each of the software components of an application can reside on a different computer (i.e. physical or virtual).

The usage scenario comparator 20 compares the usage scenario snapshot of the system under study with a snapshot taken of the reference computer system executing the same usage scenario. The usage scenario comparator 20 also outputs to *inter alia* the usage scenario viewer 18, the difference between the two snapshots. The usage scenario viewer 18 graphically represents the relationships and data-flow between the software components involved in the usage scenario. The usage scenario viewer 18 also depicts differences between the usage scenario snapshot of the system under study and the reference system.

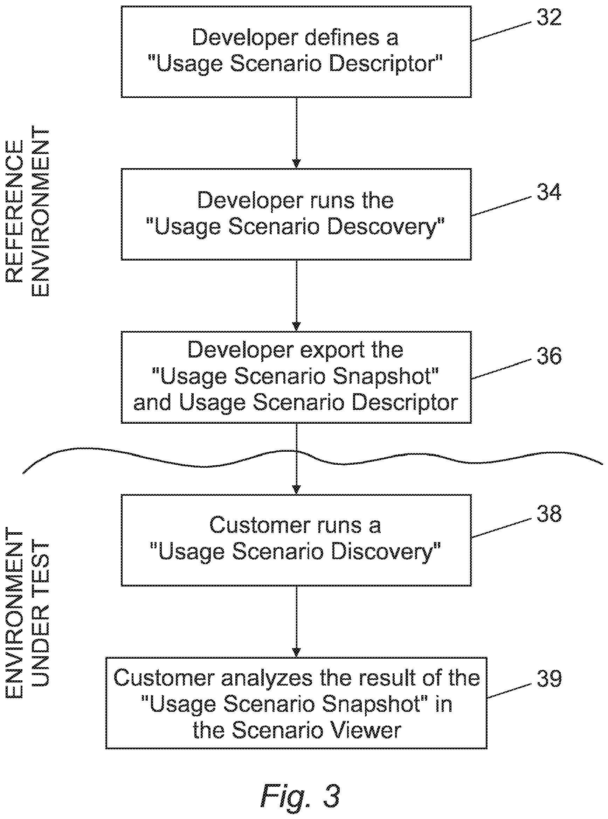

Referring to Figure 3, the method of the preferred embodiment comprises the steps of allowing 32 a user to define a usage scenario descriptor for a particular usage scenario. As discussed, the usage scenario may be a "reference usage scenario" (a typical usage scenario of the product provided by the software manufacturer) or a "real-world usage scenario" (a specific usage scenario implemented by a user for a specific purpose). The method of the preferred embodiment then allows 34 the user to execute a usage scenario discovery process in a reference environment and produce a snapshot thereof. The method of the preferred embodiment exports 36 the usage scenario descriptor and usage scenario snapshot of the reference environment, to the repository.

The method of the preferred embodiment then allows 38 a user of a computer system under study, to perform usage scenario discovery of the computer system, using the same usage scenario as used with the reference system. As with the reference environment, the method of the preferred embodiment produces a snapshot of the system under study whilst executing the usage scenario discovery therein.

The method of the preferred embodiment then compares the usage scenario snapshot of the reference environment and that of the computer system under study; and allows the user to analyse 39 the results of this comparison in the scenario viewer so as to identify and detect the relevant problems therein.

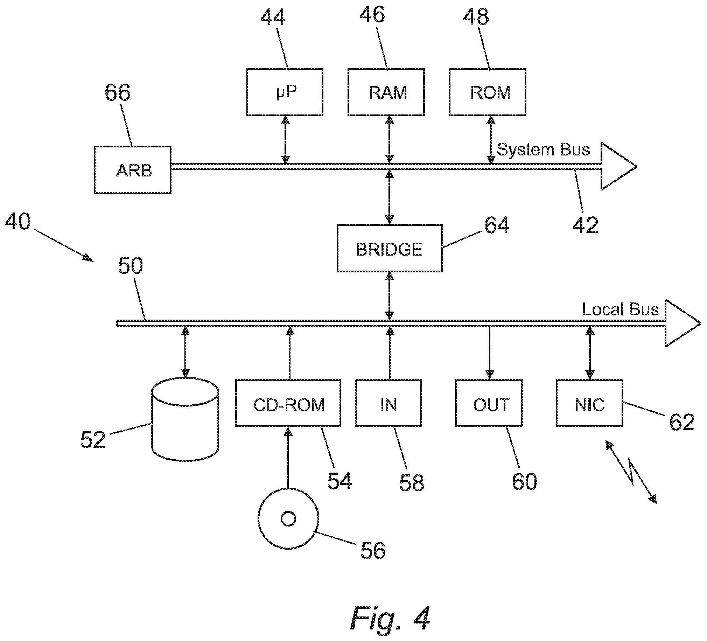

Referring to Figure 4, a generic computer system 40 adapted to support the preferred embodiments is formed by several units that are connected in parallel to a system bus 42. In detail, one or more microprocessors (XP) 44 control operation of the computer 40; a RAM 46 is directly used as a working memory by the microprocessors 44, and a ROM 48 stores basic code for a bootstrap of the computer 40. Peripheral units are clustered around a local bus 50 (by means of respective interfaces). Particularly, a mass memory consists of a hard-disk 52 and a drive 54 for reading CD-ROMs 56. Moreover, the computer 40 includes input devices 58 (for example, a keyboard and a mouse), and output devices 60 (for example, a monitor and a printer). A Network Interface Card (NIC) 62 is used to connect the computer 40 to the network. A bridge unit 64 interfaces the system bus 42 with the local bus 50. Each microprocessor 44 and the bridge unit 64 can operate as master agents requesting an access to the system bus 42 for transmitting information. An arbiter 66 manages the granting of the access with mutual exclusion to the system bus 42.

Similar considerations apply if the system has a different topology, or it is based on other networks. Alternatively, the computers have a different structure, including equivalent units, or consist of other data processing entities (such as PDAs, mobile phones and the like) .

Alterations and modifications may be made to the above without departing from the scope of the invention.

## Claims

1. A method of identifying a problem in a computer system formed of a software application having components installed in a distributed computer environment, the method comprising the steps of:
- identifying a particular usage scenario descriptor comprising a runtime section which includes descriptions of a set of actions to be performed on the components of the software application under study;
- accessing a description of at least one set of actions and information on said actions for their execution involving some components of the software application, said actions including collecting snapshots on the distributed computers where the software application components are installed; wherein the snapshots are usage scenario snapshots containing logs, application status, system information, registry information and data pertaining to the status of a computer system;
- executing (38), in a computer system under study, the accessed at least one set of actions in the runtime section of the usage scenario on the components of the software application using the accessed information on said actions;
- acquiring (36) snapshots from the distributed computers where the components of the software application are installed on the computer system under study in which the at least one set of actions has been executed according to the executing step;
- accessing snapshots acquired from the distributed computers in a reference computer system where the components of the software application are installed in which the same at least one set of actions has been executed using the same information on said actions as in the step of accessing the description;
- comparing the acquired snapshots from the computer system under study with the accessed snapshots from the reference computer system, to identify the one or more differences and to isolate any software application component involved in the usage scenario wherein a software problem has occurred.

2. The method of claim 1 further comprising the initial steps of:
- allowing (32) a user to define at least one set of actions to be performed on the software application components;
- executing (34), in a reference computer system, the at least one set of actions on the components of the software application which is running in said reference computer system;
- acquiring (36) snapshots on a reference computer system obtained from the execution of the at least one set of actions on the components of the software application which is running on said reference system;
- making accessible to the computer system under study the description of the at least one set of actions to be performed on the software application components and the snapshots acquired on a reference system obtained from the execution of the at least one set of actions on the components of the software application which is running in said reference system.

3. The method of claim 1 or 2 further comprising the initial steps of:
- making accessible to the computer system under study the description of at least one standard set of actions to be performed on the software application components provided by the software application manufacturer and the snapshots acquired on a reference system obtained from the execution of the at least one set of actions on the components of the software application which is running in said reference system.

4. The method of any one of claims 1 to 3 further comprising the step of:
- allowing the user to analyse (39) the differences to identify the difference most likely to represent the problem in the computer system under study.

5. The method as claimed in any preceding claim wherein the step of allowing (32) a user to define a one or more set of actions to be performed on the software application comprises the steps of:
- allowing the manufacturer to define one or more usage scenarios reflecting a typical usage scenario of the software application; and
- allowing a user to define a one or more specific set of actions to be performed on the software application reflecting a specific use of the software application.

6. The method as claimed in any one of the preceding claims wherein the method further comprises the step of depicting one or more relationships and flows of data between one or more software components in the software application executed in the computer system under study.

7. The method as claimed in any one of the preceding claims wherein the method comprises the step of executing the method at the end of a software installation process.

8. The method as claimed in any one of the preceding claims wherein the method comprises the steps of automatically executing the method on detection of an error in the computer system under study.

9. The method as claimed in any one of the preceding claims, wherein the method comprises the step of executing the method in a distributed computing environment.

10. A system for identifying a software problem, the system comprising components adapted to perform the method of any one of the preceding claims.

11. The system as claimed in Claim 10 wherein the standard set of actions to be performed on the software application and the user defined set of actions to be performed on the software application are described by XML files.

12. A computer program product stored in a medium readable by a computer machine, the computer program product tangibly embodying readable program means for causing the computer to perform the method according to any one of Claims 1 to 9.

13. A service deployed in a data processing system for performing the method of any claim 1 to 9.

## Patentansprüche

1. Verfahren zum Identifizieren eines Problems in einem Computersystem, das aus einer Software-Anwendung mit Komponenten gebildet wird, die in einer verteilten Computerumgebung installiert sind, wobei das Verfahren die folgenden Schritte umfasst:
- Identifizieren eines bestimmten Nutzungsszenario-Kennzeichens, das einen Laufzeit-Abschnitt umfasst, der Beschreibungen eines Satzes von Aktionen beinhaltet, die an den Komponenten der betreffenden Software-Anwendungen auszuführen sind;
- Zugreifen auf eine Beschreibung aus mindestens einem Satz von Aktionen und Daten über die Aktionen für ihre Ausführung, die einige Komponenten der Software-Anwendung verwendet, wobei die Aktionen ein Erfassen von Schnappschüssen auf den verteilten Computern beinhalten, auf denen die Komponenten der Software-Anwendung installiert sind; wobei es sich bei den Schnappschüssen um Nutzungsszenarien handelt, die Protokolle, Anwendungszustand, Systemdaten, Registry-Daten und Daten bezüglich des Zustands eines Computersystems enthalten;
- Ausführen (38) des mindestens einen aufgerufenen Satzes von Aktionen in einem betreffenden Computersystem in dem Laufzeit-Abschnitt des Nutzungsszenarios an den Komponenten der Software-Anwendung, wobei die abgerufenen Daten für die Aktionen verwendet werden;
- Erfassen (36) von Schnappschüssen von den verteilten Computern, wobei die Komponenten der Software-Anwendung auf dem betreffenden Computersystem installiert sind, in dem der mindestens eine Satz von Aktionen gemäß dem Ausführungsschritt ausgeführt wurde;
- Zugreifen auf die Schnappschüsse, die von den verteilten Computern in einem Bezugs-Computersystem erfasst wurden, in dem die Komponenten der Software-Anwendung installiert sind und in dem derselbe mindestens eine aufgerufene Satz von Aktionen ausgeführt wurde, wobei die dieselben Daten für die Aktionen wie in dem Schritt des Zugreifens auf die Beschreibung verwendet wurden;
- Vergleichen der von dem betreffenden Computersystem erfassten Schnappschüsse mit den von dem Bezugs-Computersystem aufgerufenen Schnappschüssen zum Identifizieren des einen oder der mehreren Unterschiede und zum Isolieren aller Software-Anwendungskomponenten, die in dem Nutzungsszenario verwendet werden, in dem ein Software-Problem festgestellt wurde.

2. Verfahren nach Anspruch 1, das ferner die folgenden anfänglichen Schritte umfasst:
- Erlaubnis (32) für einen Nutzer, mindestens einen Satz von Aktionen festzulegen, die an den Software-Anwendungskomponenten ausgeführt werden müssen;
- Ausführen (34) des mindestens einen Satzes von Aktionen in einem Bezugs-Computersystem an den Komponenten der Software-Anwendung, die auf dem Bezugs-Computersystem ausgeführt wird;
- Erfassen (36) von Schnappschüssen auf einem Bezugs-Computersystem, die von der Ausführung des mindestens einen Satzes von Aktionen an den Komponenten der Software-Anwendung erhalten werden, die auf dem Bezugssystem ausgeführt wird;
- für das betreffende Computersystem Verfügbarmachen der Beschreibung des mindestens einen Satzes von Aktionen, die an den Komponenten der Software-Anwendung auszuführen sind, und der Schnappschüsse, die auf einem Bezugssystem erfasst und von der Ausführung des mindestens einen Satzes von Aktionen an den Komponenten der Software-Anwendung erhalten wurden, die in dem Bezugssystem ausgeführt wird.

3. Verfahren nach Anspruch 1 oder 2, das ferner die folgenden anfänglichen Schritte umfasst:
- für das betreffende Computersystem Verfügbarmachen der Beschreibung des mindestens einen Standardsatzes von Aktionen, die an den Komponenten der Software-Anwendung auszuführen sind, die durch den Hersteller der Software-Anwendung bereitgestellt werden, und der Schnappschüsse, die auf einem Bezugssystem erfasst und von der Ausführung des mindestens einen Satzes von Aktionen an den Komponenten der Software-Anwendung erhalten wurden, die auf dem Bezugssystem ausgeführt wird.

4. Verfahren nach einem der Ansprüche 1 bis 3, das ferner die folgenden Schritte umfasst:
- Erlaubnis für den Nutzer, die Unterschiede zu analysieren (39), um den Unterschied zu identifizieren, der höchstwahrscheinlich das Problem in dem betreffenden Computersystem darstellt.

5. Verfahren nach einem der vorhergehenden Ansprüche, wobei der Schritt der Erlaubnis (32) für einen Nutzer, ein oder mehrere Sätze von Aktionen festzulegen, die an der Software-Anwendung ausgeführt werden müssen, die folgenden Schritte umfasst:
- Erlaubnis für den Hersteller ,ein oder mehrere Nutzungsszenarien festzulegen, die ein typisches Nutzungsszenario der Software-Anwendung wiedergeben; und
- Erlaubnis für einen Nutzer, ein oder mehrere bestimmte Sätze von an der Software-Anwendung auszuführenden Aktionen festzulegen, die eine bestimmte Nutzung der Software-Anwendung wiedergeben.

6. Verfahren nach einem der vorhergehenden Ansprüche, wobei das Verfahren ferner den Schritt des Beschreibens einer oder mehrerer Datenbeziehungen und -Flüsse zwischen der einen oder den mehreren Software-Komponenten in der Software-Anwendung umfasst, die in dem betreffenden Computersystem ausgeführt wird.

7. Verfahren nach einem der vorhergehenden Ansprüche, wobei das Verfahren den Schritt des Ausführens des Verfahrens am Ende eines Software-Installationsprozesses umfasst.

8. Verfahren nach einem der vorhergehenden Ansprüche, wobei das Verfahren die Schritte des automatischen Ausführens des Verfahrens beim Erkennen eines Fehlers in dem betreffenden Computersystem umfasst.

9. Verfahren nach einem der vorhergehenden Ansprüche, wobei das Verfahren den Schritt des Ausführens des Verfahrens in einer verteilten Computerumgebung umfasst.

10. System zum Identifizieren eines Software-Problems , wobei das System Komponenten umfasst, die zum Ausführen des Verfahrens nach einem der vorhergehenden Ansprüche geeignet sind.

11. System nach Anspruch 10, wobei der Standardsatz von Aktionen, die an der Software-Anwendung auszuführen sind, und der nutzerdefinierte Satz von Aktionen, die an der Software-Anwendung auszuführen sind, durch XML-Dateien beschrieben werden.

12. Computerprogramm-Produkt, das auf einem für einen Computer lesbaren Medium gespeichert ist, wobei das Computerprogramm-Produkt lesbare Programmmittel physisch realisiert, um den Computer zum Ausführen des Verfahrens nach einem der Ansprüche 1 bis 9 zu veranlassen.

13. Dienst zum Ausführen des Verfahrens nach einem der Ansprüche 1 bis 9, wobei der Dienst in einem Datenverarbeitungs-System eingerichtet wird.

## Revendications

1. Procédé d'identification d'un problème dans un système informatique formé d'une application logicielle ayant des composants installés dans un environnement informatique distribué, le procédé comprenant les étapes consistant à :
- identifier un descripteur de scénario d'utilisation particulier comprenant une section de temps d'exécution qui inclut une description d'un ensemble d'actions à effectuer sur le composant de l'application logicielle à l'étude ;
- accéder à une description d'au moins un ensemble d'actions et des informations relatives audites actions en vue de leur exécution impliquant certains composants de l'application logicielle, lesdites actions incluant la collecte d'instantanés relatifs aux ordinateurs distribués où les composants d'application logicielle sont installés ; les instantanées étant des instantanés de scénario d'utilisation contenant des journalisations, statuts d'application, informations de système, informations de registre et données se rapportant au statut d'un système informatique ;
- exécuter (38), dans un système informatique à l'étude, au moins un ensemble d'actions accédées dans la section de temps d'exécution du scénario d'utilisation relatif aux composants de l'application logicielle utilisant les informations accédées relatives auxdites actions ;
- acquérir (36) des instantanés provenant des ordinateurs distribués où les composants de l'application logicielle sont installés sur le système informatique à l'étude dans lequel au moins un ensemble d'actions a été exécuté conformément à l'étape d'exécution ;
- accéder aux instantanés acquis à partir d'ordinateurs distribués dans un système informatique de référence où les composants de l'application logicielle sont installés, le même au moins un ensemble d'actions ayant été exécuté en utilisant les mêmes informations sur lesdites actions comme à l'étape d'accès à la description n ;
- comparer les instantanés acquis à partir du système informatique à l'étude avec les instantanés accédés à partir du système informatique de référence, pour identifier la ou les différences et isoler n'importe quel composant d'application logicielle impliqué dans le scénario d'utilisation dans lequel un problème logiciel est survenu.

2. Procédé selon la revendication 1, comprenant en outre les étapes initiales consistant à :
- permettre (32) à un utilisateur de définir au moins un ensemble d'actions à effectuer sur les composants d'application logicielle ;
- exécuter (34), dans un système informatique de référence, au moins un ensemble d'actions sur les composants de l'application logicielle qui s'exécute dans ledit système informatique de référence ;
- acquérir (36) des instantanés relatifs à un système informatique de référence obtenus d'après l'exécution d'au moins un ensemble d'actions sur le composant de l'application logicielle qui s'exécute sur ledit système de référence ;
- rendre accessible au système informatique à l'étude la description d'au moins un ensemble d'actions à effectuer sur le composant d'application logicielle et les instantanés acquis sur un système de référence obtenus d'après l'exécution d'au moins un ensemble d'actions sur le composant de l'application logicielle qui s'exécute dans ledit système de référence.

3. Procédé selon la revendication 1 ou 2, comprenant en outre les étapes initiales consistant à :
- rendre accessible au système informatique à l'étude la description d'au moins un ensemble d'actions standard à effectuer sur les composants d'application logicielle fournis par le fabricant d'application logicielle et les instantanés acquis sur un système de référence obtenus d'après l'exécution d'au moins un ensemble d'actions sur les composants de l'application logicielle qui s'exécute dans ledit système de référence.

4. Procédé selon l'une quelconque des revendications 1 à 3, comprenant en outre l'étape consistant à :
- permettre à l'utilisateur d'analyser (39) les différences afin d'identifier la différence la plus susceptible de représenter le problème dans le système informatique à l'étude.

5. Procédé selon l'une quelconque des revendications précédentes, dans lequel l'étape consistant à permettre à l'utilisateur de définir un ou plusieurs ensemble d'actions à effectuer sur l'application logicielle comprend les étapes consistant à :
- permettre au fabricant de définir un ou plusieurs scénarios d'utilisation reflétant un scénario d'utilisation typique de l'application logicielle ; et
- permettre à un utilisateur de définir un ou plusieurs ensembles d'actions spécifiques à effectuer sur l'application logicielle reflétant une utilisation spécifique de l'application logicielle.

6. Procédé selon l'une quelconque des revendications précédentes, dans lequel le procédé comprend en outre l'étape consistant à décrire une ou plusieurs relations et flux de données entre un ou plusieurs composants logiciels dans l'application logicielle exécutée dans le système informatique à l'étude.

7. Procédé selon l'une quelconque des revendications précédentes dans lequel le procédé comprend l'étape d'exécution du procédé à la fin d'un processus d'installation de logiciel.

8. Procédé selon l'une quelconque des revendications précédentes, dans lequel le procédé comprend les étapes d'exécution automatique du procédé lors de la détection d'une erreur dans le système informatique à l'étude.

9. Procédé selon l'une quelconque des revendications précédentes, dans lequel le procédé comprend l'étape d'exécution du procédé dans un environnement informatique distribué.

10. Système d'identification d'un problème logiciel, le système comprenant des composants adaptés pour mettre en oeuvre le procédé selon l'une quelconque des revendications précédentes.

11. Système selon la revendication 10, dans lequel l'ensemble d'actions standard à effectuer sur l'application logicielle et l'ensemble d'actions définies par l'utilisateur à effectuer sur l'application logicielle sont décrits par des fichiers XML.

12. Produit de programme informatique mémorisé dans un support lisible par machine informatique, le produit de programme informatique renfermant de manière tangible des moyens de programme lisible pour amener l'ordinateur à mettre en oeuvre le procédé selon l'une quelconque des revendications 1 à 9.

13. Service déployé dans un système de traitement de données pour mettre en oeuvre le procédé selon l'une quelconque des revendications 1 à 9.
